# EUROPEAN PATENT SPECIFICATION

(11) **EP 2 591 750 B1**
(45) Date of publication and mention of the grant of the patent: **08.04.2015**
(21) Application number: 12189521.3
(22) Date of filing: 23.10.2012
(51) Int. Cl.: A61C 17/02, A61C 17/022, A61C 1/00

(54) **Dental Syringe**
Dentalspritze
Seringue dentaire

(30) Priority: 08.11.2011 IT BO20110639
(43) Date of publication of application: 15.05.2013
(73) Proprietor: MOCOM S.r.L., 40026 Imola (BO) (IT)
(72) Inventor: Borsari, Valerio, 40013 Castel Maggiore (Bologna) (IT); Zanetti, Marco, 40013 Castel Maggiore(Bologna) (IT)
(74) Representative: Lunati & Mazzoni S.r.L.

(56) References cited:
- EP-A1- 1 389 449
- GB-A- 480 196
- US-A1- 2005 048 436

## Description

The present invention concerns dental syringes, i.e. devices supplying alternatively water, air, or a spray comprising two said fluids, and in particular to a device for heating said fluids. Similar dental syringes are described in patent applications EP-A-1389449, GB-A-480196 and US-A-2005/048436.

Such syringes are well known in the art, in which they are used to blow air/dry the treatment site, or to clean the treatment site with a jet of water or spray comprising water and air. The supplied fluids may be warm (around body temperature, 37°C) in order to avoid triggering a painful reaction or a defence reaction. On the other hand, in some therapeutic situations using fluids at room temperature might be necessary, for instance to test patient's reflexes or to limit blood loss.

In the known art several examples of heating devices for dental syringes are present. Such devices can be grouped in two different categories: a dated one, wherein the fluid heating device was upriver the syringe (in the dental unit), and a more modern one, wherein the fluid heating device is already in the syringe itself.

In this second category of devices, heating is actuated when the buttons for supplying water and/or air are pressed. Pressing the buttons, as a matter of fact, in addition to opening the valves of the hydropneumatic circuit, activates the microswitches which close the heating circuit.

However, due to construction peculiarities, the first portion of supplied fluids will not be at the desired temperature, like when at home the hot water tap is turned on.

The use of resistances or PTC as heating elements is known; resistances generally do not have a temperature control system, therefore they are actuated only when the supply button is pressed. PTC are self-regulating resistances, but their temperature control is not very precise and can lead to an excessive heating of the handpiece and fluids; for this reason heating is actuated only when the supply button is pressed. Hence with both systems the initial transitory supply of cold water occurs.

Had a temperature control system to be realized, the functioning of a heating element (resistance or PTC) would require a further electronic element, i.e. a MOSFET transistor or TRIAC.

Aim of the present invention is supplying a dental syringe without the above- cited disadvantages. In particular, one of the advantages of the present invention lies in the fact that the answer is immediate: no transitory period occurs before warm air and/or water are supplied.

Moreover, the fluids are heated even if the flow is very small: a given stroke of the supply buttons, and therefore a given flow rate, is not necessary to actuate the microswitches. Another advantage lies in the fact of supplying a device which is of simple and economic construction in addition to its efficacy.

The heating device of the present invention can be realized using two MOSFET transistors opportunely controlled so as to simulate a resistive behaviour. Suitable sensors, located in strategic positions and afferent to a microprocessor, control fluid temperature, so as to avoid both overheating and excessive lowering of the temperature itself.

The present invention will now be described in one of its preferred embodiments with the help of the following Figures, showing:
**Fig. 1** a overall perspective view of a syringe;
**Fig. 2A** a syringe with a L-shaped nozzle;
**Fig. 2B** a syringe with a pen shaped nozzle;
**Fig. 3** a detail of the syringe inside body;
**Fig. 4** a partial section of the syringe inside body;
**Fig. 5A** a detail of the heating device;
**Fig. 5B** an exploded view of the heating device;
**Fig. 6A** the heat exchanger;
**Fig. 6B** a partial view of water path in the heat exchanger.

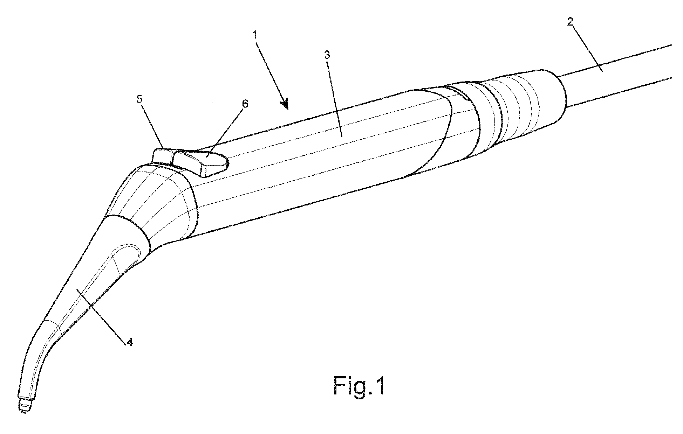

Fig. 1 shows a dental syringe 1 on the whole. Number 2 indicates the cord connecting the syringe to the dental unit (not shown), 3 the syringe housing, 4 the nozzle, 5 the air supply button and 6 the water supply button.

Pressing button 5 and 6 at the same time, spray is supplied.

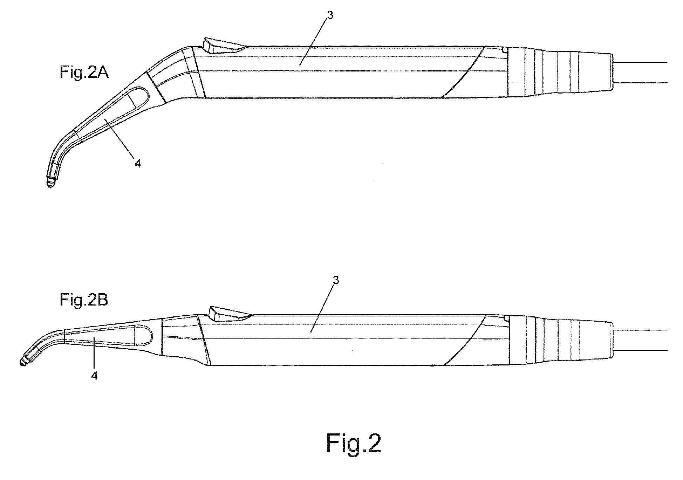

Fig. 2A shows the syringe of Fig. 1 in a different perspective; Fig. 2B shows a different embodiment, in which nozzle 4, instead of having a L shape, is coinciding with the axis of syringe body 3 (pen shaped syringe).

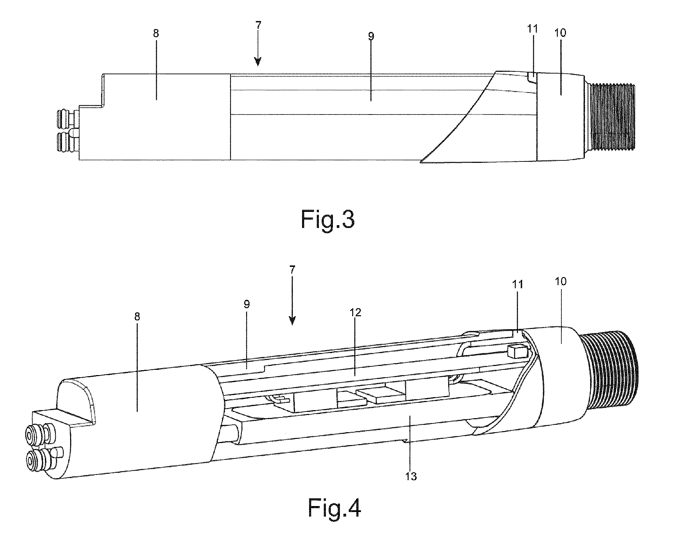

Fig. 3 shows the inside body 7 of the syringe, once the housing 3 has been removed to sterilize it. From the comparison with Fig. 2 the fact that housing 3, when mounted, partially covers body 7 of the syringe can be appreciated. In this Figure, 8 is the portion where valves are; when valves are actuated by buttons 5 and 6, they supply air and water. Section 9 contains the fluid heating devices object of the present invention, 10 indicates the ring nut controlling the switching on/off of the heating, signalled by the switching on of an indicator 11.

Fig. 4 shows a partial section of inside body 7. In addition to the components already mentioned in Fig. 3, an electronic board 12 is visible, carrying heating devices, and a heat exchanger 13.

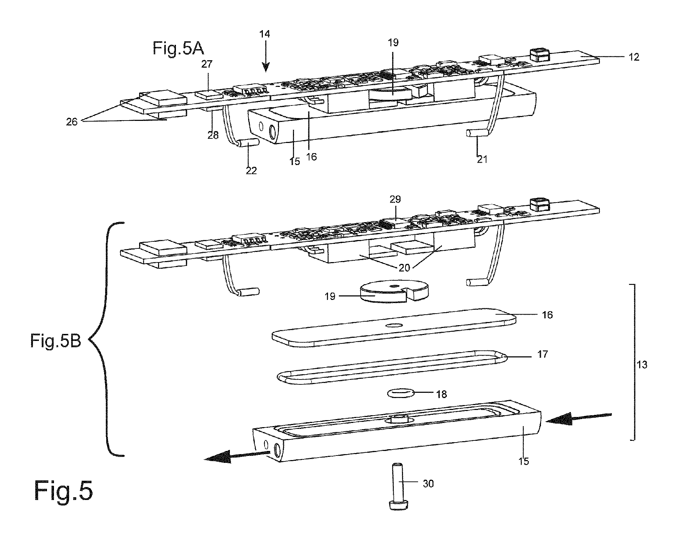

Figs. 5A and 5B show the detail of heating device 14, comprising: electronic board 12, heat exchanger 13, in its turn comprising a body 15 made of thermally insulating material, and a conducing heat but electrically insulating element 16. Between body 15 and element 16 seals 17 and 18 are interposed. In particular, conductive element 16 is made in anodized aluminium, which transmits heat, but is electrically insulating. Number 19 indicates a fixing element. Number 20 indicates two MOSFET transistor, 21 a temperature sensor of heat exchanger 13, 22 a temperature sensor of the water flowing out of heat exchanger body 13. The two sensors 21 and 22 are connected through suitable electric wires to electronic board 12, and are opportunely positioned, as better elucidated in the following.

Electronic board 12, fixing element 19 and heating element 13 are kept in contact through the tightening of screw 30.

Sensor 21 is in contact with heat exchanger element 16, and sensor 22 is placed in the water out-flow area of the heat exchanger 13.

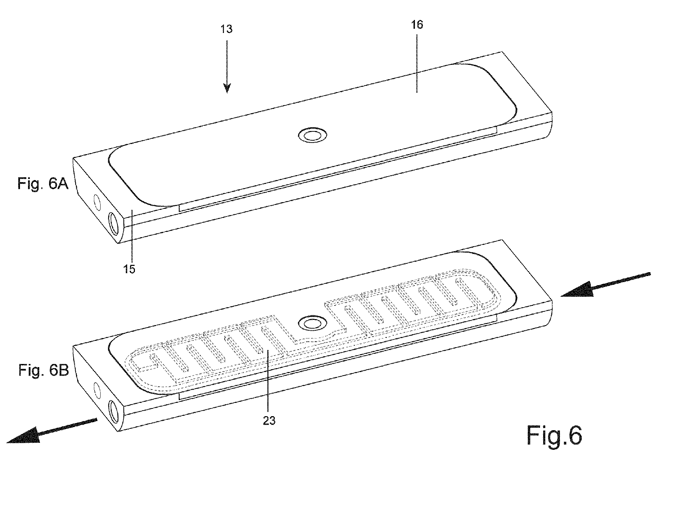

The water, coming from the dental unit through cord 2, enters in body 7 of syringe 1 in the sense showed by the arrow, and successively in body 15 of heat exchanger 13. In heat exchanger body 15 there is provided a labyrinth 23, visible in Fig. 6B, which can be realized alternatively either in the inside of element 16, or in the inside of element 15, or in both elements 15 and 16.

After having switched ring nut 10 on, the water, during its flow through labyrinth 23, is heated by the heat transmitted by two MOSFET transistors 20.

Water temperature is adjusted through the signals coming from temperature sensors 21 and 22. Sensor 21 detects heat exchanger 13 temperature, and is sensitive to flow variations, in particular to the opening and closing of the valve actuated by button 6.

Water is always kept warm inside syringe 1, even when the syringe is not used, on condition that ring nut 10 is switched on.

At rest, sensor 21 keeps water temperature within a predetermined range, hindering it from going lower than a predetermined threshold or going higher than a different predetermined threshold.

When water is supplied, sensor 21 detects the sudden fall of temperature due to flow, and correspondingly transmits signals to the electronic circuit, which in its turn transmits them to MOSFET transistors. The electronic circuit is provided with a microprocessor 29 which processes and transmits the signals according to set temperature values.

Vice versa, when water flow is stopped, sensor 21 detects temperature increase and sends a corresponding signal to the circuit.

Sensor 22 detects the temperature of the water out-flowing from heat exchanger 13, transmitting the signal so that temperature remains within a predetermined range even as a consequence of flow variation.

With this water circuit, when button 6 is pressed, the outflowing water is immediately at the pre-set temperature. It must be kept in mind that switching the circuit on through ring nut 10 brings the water to the predetermined temperature, without any possibility of adjustment by the operator.

Electronic board 12 comprises a section wherein resistive elements 26 for air heating are present. These are resistive elements of traditional type, characterized by a large surface to enhance heat exchange between element and air. Moreover, two air temperature sensors 27 and 28 are present, one at entry 27 and one at exit 28. Like for water, once ring nut 10 is switched on, air is always kept warm.

The use of MOSFET transistors for water heating allows to unify the control element and the heating element, eliminating a component (resistance or PTC) from the handpiece with consequent advantages, in term of bulk and expense. Temperature control is made through a micro processor 29, keeping under control four variables:_ outflowing water temperature through sensor 22; _ heating element temperature through sensor 21; _ inflowing air temperature through sensor 27; _ outflowing air temperature through sensor 28.

It is advisable to mention that water temperature control performed through heat exchanger 13, heating element 20, sensor 21 and 22 on one side, and air temperature control performed through heating elements 26 and sensors 27 and 28 on the other side, are totally independent from each other.

The invention consists on one hand in an innovative use of, in particular, MOSFET transistors as heating element, on the other hand in the control system, allowing to keep the two fluids (water and air) within a predetermined range of temperature even when the syringe is at rest.

## Claims

1. Dental syringe (1) comprising: a supply cord (2) for connecting it to a dental unit, a housing (3), a nozzle (4), a couple of valves for supplying and stopping water and air, a heating element (26) for air and a water heating system comprising at least one heating element (20), the heating elements (20, 26) being switchable on by a ring nut (10), wherein the heating elements (20, 26) are contained inside housing (3) wherein the dental syringe comprises means (21, 22, 27, 28, 29) for fluids temperature control, capable of keeping said fluids warm even when said syringe (1) is at rest, wherein said water heating system comprises a heat exchanger (13), a temperature sensor (21) at the heat exchanger, a temperature sensor (22) at the exit from the heat exchanger (13), and a microprocessor (29).

2. Dental syringe according to claim 1, wherein said at least one heating element (20) is a MOSFET transistor.

3. Dental syringe according to one or more of previous claims, wherein the flow of water inside the heat exchanger (13) occurs through a labyrinth (23).

4. Dental syringe according to one or more of previous claims, wherein said heat exchanger (13), comprises a body (15), made of thermally insulating material, and a conductive element (16) conducting heat but electrically insulating, wherein seals (17, 18) are interposed between body (15) and conductive element (16).

5. Dental syringe according to claims 3 and 4, wherein said labyrinth (23) is realized at least in the internal part of the conductive element (16).

6. Dental syringe according to claim 3 or 4, wherein said labyrinth (23) is realized at least in the internal part of body (15).

7. Dental syringe according to claim 6, wherein the surface (16) of heat ex changer (13) in contact with heating elements (20) is realized with a thermally conductive and electrically insulating material.

8. Dental syringe according to claim 3, wherein water temperature sensor (21) is positioned so as to detect the temperature of the thermal exchange surface (16).

9. Dental syringe according to claim 3, wherein water temperature sensor (22) is positioned so as to detect the temperature of the water flowing out from the heat exchanger (13).

10. Dental syringe according to claim 1, wherein air heating system comprises at least a resistive element (26), a temperature sensor (27) at entry, a temperature sensor (28) at exit, and the microprocessor (29).

11. Dental syringe according to claims 2 or 3, wherein water heating system (20, 21, 22, 29) and air heating system (26, 27, 28, 29) work independently from each other.

## Patentansprüche

1. Dentalspritze (1), die Folgendes umfasst: eine Versorgungsleitung (2) für den Anschluss an die Behandlungseinheit, ein Gehäuse (3), eine Tülle (4), ein Ventilpaar, um die Ausgabe und das Stoppen der Wasser- und Luftzufuhr zu gestatten, ein Lufterwärmungselement (26) für die Wasser- und Lufterwärmungssysteme, die mindestens ein Wassererwärmungselement (20) umfassen, wobei die Erwärmungselemente (20, 26) über eine Steuerung (10) eingeschaltet werden können, in der die Erwärmungselemente (20, 26) im Inneren des Gehäuses (3) enthalten sind, in dem die Dentalspritze (1) Vorrichtungen (21, 22, 27, 28, 29) zur Kontrolle der Temperatur der Flüssigkeiten umfasst, die geeignet sind, die Flüssigkeiten warm zu halten, auch wenn die Spritze (1) sich in Ruhestellung befindet, bei dem das genannte Wassererwärmungssystem einen Wärmetauscher (13), einen Wassertemperatursensor (21) des Wärmetauschers (13), einen Wassertemperatursensor im Ausgang (22) aus dem Wärmetauscher (13) und einen Mikroprozessor (29) umfasst.

2. Dentalspritze nach Anspruch 1, bei der mindestens ein Wassererwärmungselement (20) ein MOSFET-Transistor ist.

3. Dentalspritze nach einem oder mehreren der vorangegangenen Ansprüche, bei der der Verlauf des Wassers im Inneren des Wärmetauschers (13) über ein Labyrinth (23) erfolgt.

4. Dentalspritze nach einem oder mehreren der vorangegangenen Ansprüche, bei der der genannte Wärmetauscher (13) einen Körper (15) aus thermisch isolierendem Werkstoff und ein leitendes Element (16), das Wärme leitet, doch elektrisch isoliert, umfasst, in dem Dichtungen (17, 18) zwischen dem Körper (15) und das leitende Element (16) eingesetzt sind.

5. Dentalspritze nach Anspruch 4, in der das Labyrinth (23) wenigstens im inneren Teil des Elements (16) untergebracht ist.

6. Dentalspritze nach Anspruch 4, in der das Labyrinth (23) wenigstens im inneren Teil der Oberfläche des leitenden Elements (16) untergebracht ist.

7. Dentalspritze nach Anspruch 5, bei der die Oberfläche (16) des Wärmetauschers (13) in Kontakt mit den Wassererwärmungselementen (20) aus einem Wärme leitenden und elektrisch isolierenden Werkstoff hergestellt ist.

8. Dentalspritze nach einem oder mehreren der vorangegangenen Ansprüche, bei der der Wassertemperatursensor (21) des Wärmetausches so positioniert ist, dass er die Temperatur des leitenden Elements (16) misst.

9. Dentalspritze nach einem oder mehreren der vorangegangenen Ansprüche, bei der ein Temperatursensor im Ausgang (22) so positioniert ist, dass er die Temperatur des Flusses im Ausgang aus dem Wärmetauscher (13) misst.

10. Dentalspritze nach einem oder mehreren der vorangegangenen Ansprüche, bei dem das Lufterwärmungssystem aus mindestens einem Widerstandselement (26) und einem Lufttemperatursensor (27) im Eingang, einem Temperatursensor im Ausgang (28) und dem Mikroprozessor (29) besteht.

11. Dentalspritze nach Anspruch 9, bei der das Wassererwärmungssystem (20, 21. 22, 29) und das Lufterwärmungssystem (26, 27, 28, 29) voneinander unabhängig funktionieren.

## Revendications

1. Seringue dentaire (1) comprenant : un cordon d'alimentation (2) pour la relier à une unité de soins, une coque (3), un bec (4), une paire de vannes pour permettre la distribution et l'arrêt d'eau et d'air, un élément de chauffage de l'air (26) pour les systèmes de chauffage d'eau et d'air comprenant au moins un élément de chauffage de l'eau (20), les éléments de chauffage (20, 26) étant activables par une commande (10), dans laquelle les éléments de chauffage (20, 26) sont contenus à l'intérieur de la coque (3), dans laquelle la seringue dentaire (1) comprend des moyens (21, 22, 27, 28, 29) pour le contrôle de la température des fluides, aptes à maintenir les fluides chauds même lorsque ladite seringue (1) est au repos, dans laquelle ledit système de chauffage de l'eau comprend un échangeur de chaleur (13), une sonde de température de l'eau (21) de l'échangeur de chaleur (13), une sonde de température de l'eau en sortie (22) de l'échangeur de chaleur (13) et un microprocesseur (29).

2. Seringue dentaire selon la revendication 1, dans laquelle au moins un élément chauffant de l'eau (20) est un transistor MOSFET.

3. Seringue dentaire selon une ou plusieurs des revendications précédentes, dans laquelle le chemin de l'eau à l'intérieur de l'échangeur (13) se fait à travers un labyrinthe (23).

4. Seringue dentaire selon une ou plusieurs des revendications précédentes, dans laquelle ledit échangeur de chaleur (13) comprend un corps (15) réalisé en matériau calorifuge et un élément de conduction (16), conduisant la chaleur mais étant électriquement isolant, dans lequel des joints d'étanchéité (17, 18) sont interposés entre le corps (15) et l'élément conductif (16).

5. Seringue dentaire selon la revendication 4, dans laquelle le labyrinthe (23) est réalisé au moins dans la partie interne de l'élément (16).

6. Seringue dentaire selon la revendication 4, dans laquelle le labyrinthe (23) est réalisé au moins dans la partie interne de la surface de l'élément de conduction (16).

7. Seringue dentaire selon la revendication 5, dans laquelle la surface (16) de l'échangeur (13) en contact avec les éléments chauffants de l'eau (20) est réalisée moyennant un matériau thermiquement conductif et électriquement isolant.

8. Seringue dentaire selon une ou plusieurs des revendications précédentes, dans laquelle la sonde de température de l'eau (21) de l'échangeur de chaleur est placée de façon à détecter la température de l'élément de conduction (6).

9. Seringue dentaire selon une ou plusieurs des revendications précédentes, dans laquelle la sonde de température en sortie (22) est placée de façon à détecter la température du flux sortant de l'échangeur (13).

10. Seringue dentaire selon une ou plusieurs des revendications précédentes, dans laquelle le système de chauffage de l'air est constitué d'au moins un élément résistif (26) et d'une sonde de température de l'air (27) en entrée, une sonde de température en sortie (28) et le microprocesseur (29).

11. Seringue dentaire selon la revendication 9, dans laquelle le système de chauffage de l'eau (20, 21, 22, 29) et le système de chauffage de l'air (26, 27, 28, 29) fonctionnent de façon indépendante l'un de l'autre.
